## Europäisches Patentamt

## European Patent Office

## Office européen des brevets

(11) Veröffentlichungsnummer: **0 075 040**
**A1**

## EUROPÄISCHE PATENTANMELDUNG

(21) Anmeldenummer: **81107560.5**

(22) Anmeldetag: **23.09.81**

(51) Int. Cl.³: **G 01 N 11/16**

(43) Veröffentlichungstag der Anmeldung: **30.03.83**
Patentblatt **83/13**

(71) Anmelder: **The Fraleigh Company, 4524 Hudson Drive, Stow Ohio 44224 (US)**

(72) Erfinder: **Fraleigh, Foster M., 45 24 Hudson Drive, Stow Ohio 44 224 (US)**

(84) Benannte Vertragsstaaten: **AT BE CH DE FR GB IT LI LU NL SE**

(74) Vertreter: **UEXKÜLL & STOLBERG Patentanwälte, Beselerstrasse 4, D-2000 Hamburg 52 (DE)**

(54) **Oszillierendes Rheometer zur Prüfung von Elastomeren.**

(57) Die Erfindung betrifft ein oszillierendes Rheometer zur Prüfung von Elastomeren mit einer Aufnahmeplatte und Einrichtungen zur erleichterten raschen Entfernung von ausgehärteten elastomeren Proben. Gemäß Figur 1 betrifft die erfindungsgemäße Ausgestaltung insbesondere den unteren Matrizenteil (20), den oberen Matrizenteil (12) und den Oszillatorkopf (32). Zweck dieser Modifikationen ist die Schaffung eines ringförmigen Hohlraums (40) um den Oszillator herum, der so abgedichtet ist, daß die elastomere Testprobe (15) während der Prüfung und Aushärtung den Oszillatorkopf (32) und den Oszillatorschaft (36) weder umhüllen noch hinterschneiden kann, so daß die Probenentnahme nach der Vulkanisation und Prüfung ohne Herausnahme des Rotors möglich ist. Aufgrund der erfindungsgemäßen Anordnung und Ausgestaltung des oberen und unteren Matrizenteils und des Oszillators kann die elastomere Probe nach dem Aushärten leicht aus dem ringförmigen Hohlraum (40) entfernt werden.

0075040

The Fraleigh Company
4524 Hudson Drive
Stow, Ohio 44224

V.St.A.                                    (18001)
                                           September 1981

Oszillierendes Rheometer zur Prüfung von Elastomeren

Beschreibung

Vorliegende Erfindung betrifft ein oszillierendes Rheometer zur Prüfung von Elastomeren.

Die bisher bekanntgewordenen Rheometer zum Prüfen der Eigenschaften von Elastomeren besitzen einen Hohlraum und einen Rotor, der nach Beendigung der Prüfung der elastomeren Probe häufig die schnelle Entfernung der ausgehärteten elastomeren Probe verhindert. Die elastomere Probe wird in den Hohlraum eingebracht, der durch den oberen Matrizenteil und den unteren Matrizenteil gebildet wird, und umhüllt normalerweise den Rotor, bevor der Härtungstest beendet ist. Ist das Elastomere jedoch erst einmal ausgehärtet, dann wird die Entfernung des Elastomeren aus dem Hohlraum durch ausgehärtetes Elastomeres, das sich rings um den Rotor innerhalb des Hohlraums abgesetzt hat, verhindert. Rheometer mit Matrizen und Rotoren, die diesen Nachteil aufweisen, sind aus US-PS 3 681 980 und US-PS 3 387 490 bekannt.

Obwohl es einerseits außerordentlich wichtig ist, eine ausreichende Kontaktfläche zwischen dem Rotor und der elastomeren Probe zu erhalten, ist es auf der anderen Seite erforderlich, daß das Umhüllen des Rotors durch die ausgehärtete elastomere Probe verhindert wird, da ein solches Umhüllen die Entfernung der elastomeren Probe aus dem Hohlraum des Rheometers komplizierter und schwieriger macht.

Der vorliegenden Erfindung liegt daher die Aufgabe zugrunde, ein Rheometer zu schaffen, aus dem sich nach Beendigung der Prüfung die ausgehärtete Probe ohne Schwierigkeiten entfernen läßt. Insbesondere soll das Rheometer so beschaffen sein, daß der Rotor nach Beendigung der Prüfung nicht von ausgehärteten Elastomeren umhüllt und darin eingeschlossen ist, so daß die damit verbundenen, oben beschriebenen Nachteile nicht mehr auftreten.

Ferner ist es ein Ziel der vorliegenden Erfindung, den Oszillationsmechanismus des oszillierenden Rheometers zu verbessern, wobei der Oszillator in der Weise modifi-

- 3 -                           0075040

ziert sein soll, daß eine äußere Umfangsfläche geschaffen wird, die das elastomere Material daran hindert, den oszillierenden Rotor zu umhüllen.

Diese Aufgabe wird erfindungsgemäß gelöst durch ein oszillierendes Rheometer zur Prüfung von Elastomeren mit einer Aufnahmeplatte und Einrichtungen zur erleichterten raschen Entfernung von ausgehärteten elastomeren Proben. Das erfindungsgemäße Rheometer ist gekennzeichnet durch

a) einen stationären Matrizenring, der auf der Aufnahmeplatte befestigt ist, mit einer inneren Umfangsfläche, die eine Öffnung begrenzt, und mit einem ausgesparten Teil im unteren Bereich der inneren Umfangsfläche,

b) einen Oszillator, dessen Kopf in die genannte Öffnung hineinragt, wobei der Oszillatorkopf eine äußere Umfangsfläche aufweist,

c) ein Mittel zum Abdichten der elastomeren Proben zwischen Oszillator und Matrizenring, angeordnet in dem ausgesparten Teil des Matrizenringes,

wobei die kombinierten Flächen aus innerer Umfangsfläche des Matrizenringes, äußerer Umfangsfläche des Oszillatorkopfes und dem ringförmigen Dichtungsmittel einen ringförmigen Hohlraum zur Aufnahme des zu prüfenden Elastomeren bilden und wobei das ausgehärtete Elastomere auf diesen ringförmigen Hohlraum begrenzt ist.

Das erfindungsgemäße Rheometer zeichnet sich ferner in einer besonderen Ausführungsform dadurch aus, daß es gekennzeichnet ist durch einen stationären Matrizenring mit einer ausgesparten inneren Umfangsfläche, einen in den Matrizenring hineinragenden Oszillatorkopf und ein Dichtungsmittel für elastomere Proben, das innerhalb des Matrizenringes angeordnet ist und mit der inneren Umfangsfläche und dem Oszillatorkopf in Berührung steht.

Die weitere Erläuterung der Erfindung erfolgt anhand der beigefügten Zeichnungen. Es stellen dar:

Figur 1    einen Querschnitt durch die wesentlichen Teile des erfindungsgemäßen Rheometers mit Aufnahmeplatte, oberer und unterer Matrize und Hohlraum sowie in Seitenansicht den Oszillator;

Figur 1a einen Teilschnitt nach Linie Ia-Ia der Figur 1;

Figur 2    einen vergrößerten Ausschnitt gemäß Bereich II der Figur 1, in dem die Gestalt des ringförmigen Hohlraums mit weiteren Einzelheiten gezeigt wird;

Figur 3 eine besondere Ausführungsform der Aussparung, in der das elastomere Dichtungsmittel angeordnet ist; und

Figur 4 eine weitere Ausführungsform des ringförmigen Hohlraums.

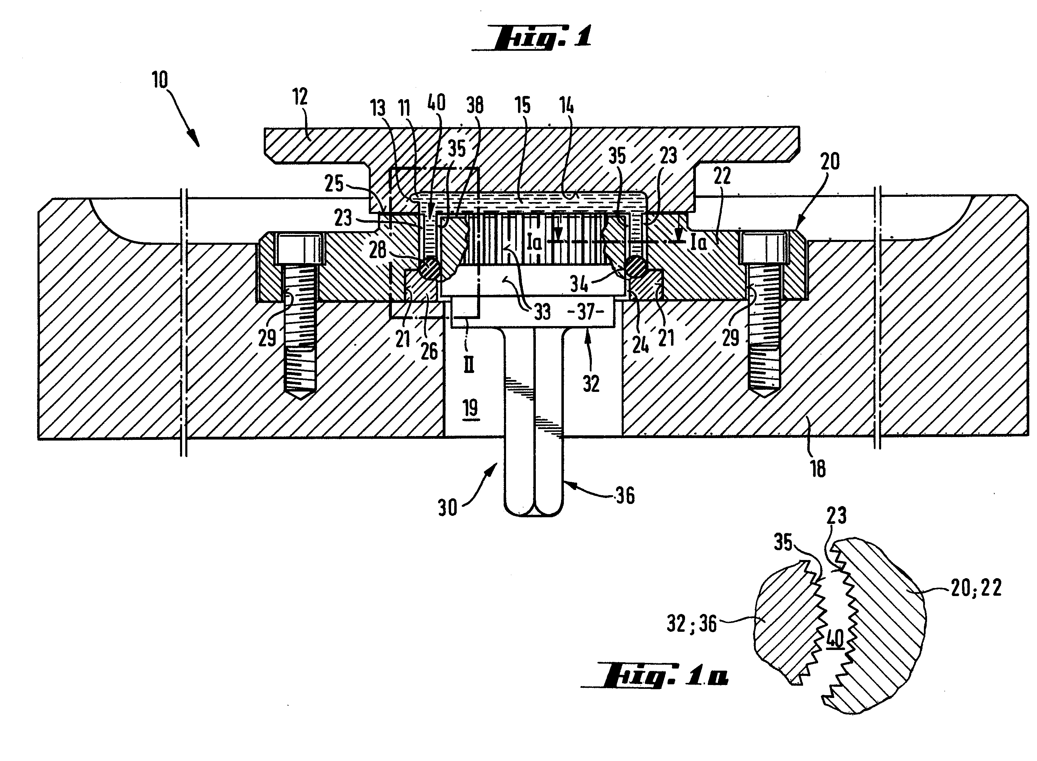

In Figur 1 ist der Querschnitt eines Teils eines erfindungsgemäßen Rheometers 10 dargestellt. Das Rheometer 10 setzt sich zusammen aus einem oberen Matrizenteil 12, einem unteren Matrizenteil 20, einer Aufnahmeplatte 18 sowie einem Oszillator 30. Der obere Matrizenteil 12 besitzt eine obere Matrizenaussparung 14 und kann irgendeine konventionelle, dem Fachmann bekannte Matrizenvorrichtung sein. Erfindungsgemäß kann die obere Matrizenaussparung gegebenenfalls auch eine sichelförmige Ausbuchtung 13 aufweisen, die sich bogenförmig unter einem Winkel von etwa 70$^\circ$ entlang der Umfangsfläche der Aussparung erstreckt, damit die elastomere Probe 15 einen Vorsprung 11 ausbilden kann, mit dessen Hilfe die Entfernung der elastomeren Probe aus der Aussparung 14 erleichtert wird.

Der erfindungsgemäße untere Matrizenteil 20 sitzt in der Aufnahmeplatte 18, die ferner eine untere Plattenöffnung 19 aufweist, aus der die Oszillatorvorrichtung 30 herausragt. Die Aufnahmeplatte 18 selbst ist ebenso wie andere Teile des Rheometers 10, die nicht in der Zeichnung dargestellt und beschrieben werden, aufgrund im Handel befindlicher Rheometer dem Fachmann bekannt. Das hat den Vorteil, daß die erfindungsgemäß abgeänderten Teile, nämlich der untere Matrizenteil 20 und die Oszillatorvorrichtung 30, nicht nur in neue, sondern auch in entsprechende bekannte Rheometer eingebaut werden können.

Erfindungsgemäß besteht der untere Matrizenteil 20 aus einem unteren Matrizenring 22, einem Ring 26 und dem elastomeren Dichtungsmittel 28.

Der Matrizenring 22 und der Ring 26 bestehen aus dem Fachmann bekannten Materialien. Das elastomere Dichtungsmittel 28 kann in Form eines O-Ringes, als kreisförmiger Dichtungsring oder in ähnlicher Weise geformt vorliegen. Der Dichtungsring kann aus solchen Elastomeren hergestellt werden, die bei den Prüftemperaturen, die bei den wiederholten Prüfungen im Rheometer anfallen, beständig sind.

Der untere Matrizenring 22 ist an der Aufnahmeplatte 18 über Befestigungsöffnungen 29 befestigt. Eine Anzahl solcher Befestigungsöffnungen 29 befinden sich rings um den Umfang des Matrizenringes 22 verteilt. Es ist besonders wichtig, daß der untere Matrizenring 22 eine innere Reibungsfläche 23 aufweist, die eine untere Matrizenöffnung
24 begrenzt, die sich von der Überdeckungsfläche 25 mit
dem oberen Matrizenteil 12 bis zur Aufnahmeplatte 18
erstreckt.

Wie aus den Figuren 1 bis 4 zu ersehen ist, weist der
Matrizenring 22 eine untere Aussparung 21 auf, in der
der Ring 26 angebracht ist. Der Ring 26 besteht vorzugsweise
aus Metall und hat eine im Querschnitt bogenförmige Aussparung 27, auf der das elastomere Dichtungsmittel 28
befestigt ist.

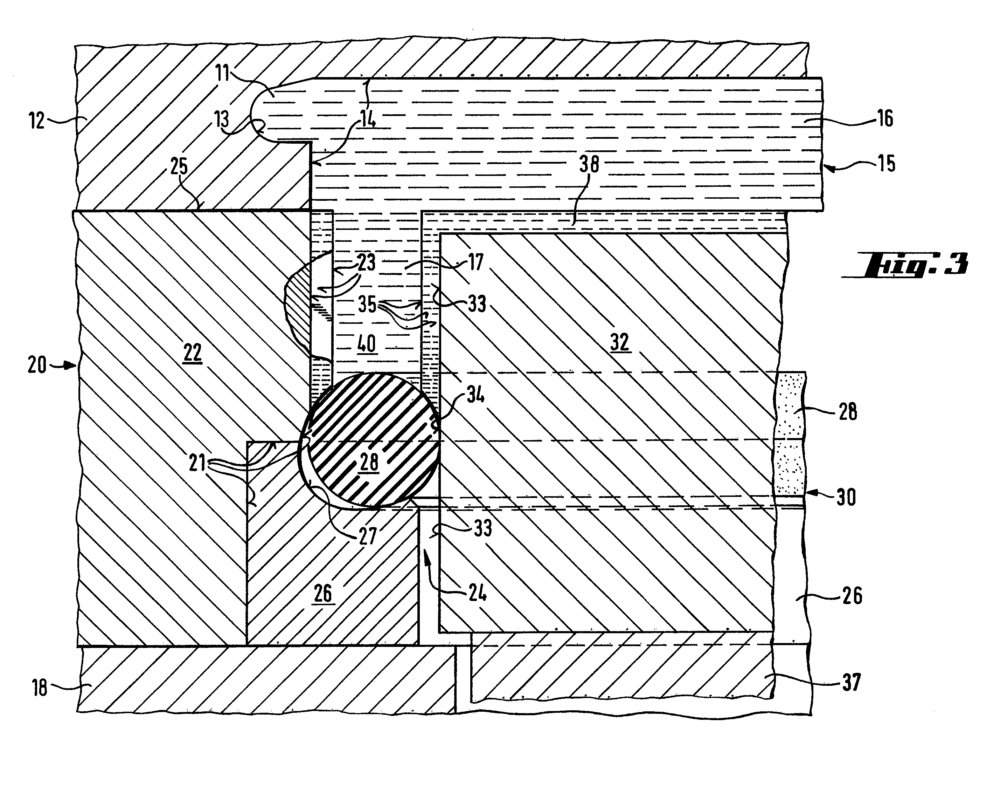

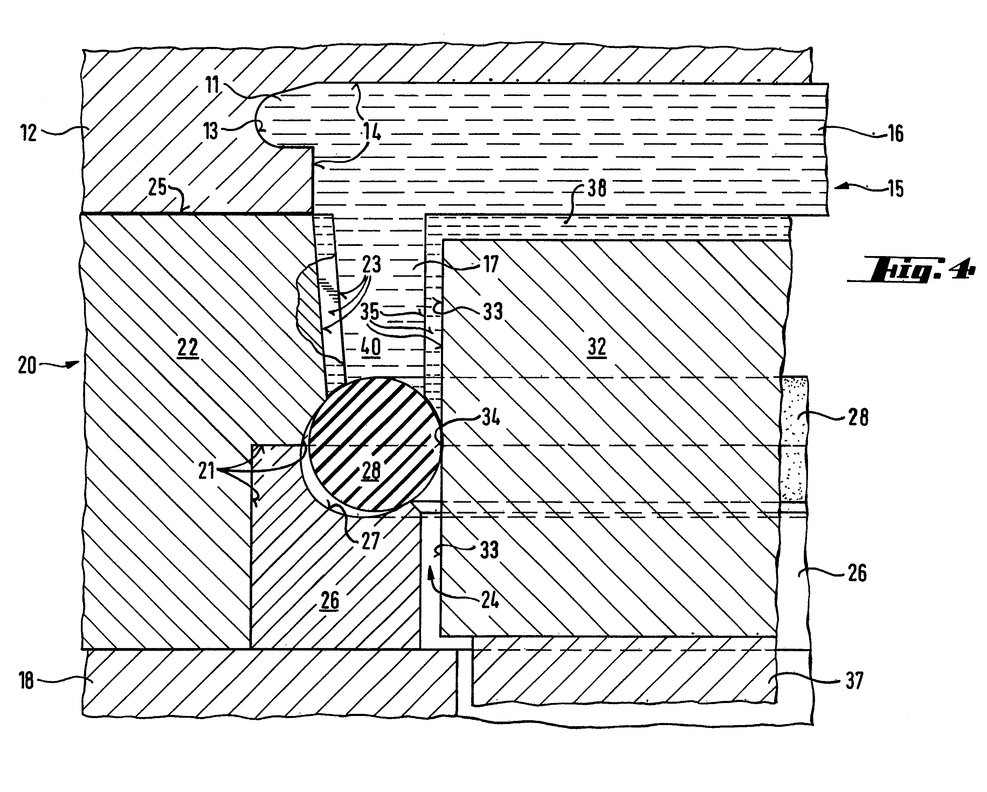

Wie aus den Figuren 3 und 4 zu ersehen ist, können die
untere Aussparung 21 und die bogenförmige Aussparung 27 modifiziert werden, um die elliptischen Deformationen des elastomeren Dichtungsmittels 28 während des
Betriebs des Rheometers 10 aufzunehmen. Es wurde gefunden,
daß ein gewisser Mindestdruckkontakt zwischen dem Dichtungsmittel 28 und dem Oszillatorteil 30 erwünscht ist.
Andernfalls würde der Druck auf den Oszillatorteil 30
zu ungenauen Messungen an den zu prüfenden elastomeren
Proben führen. Um daher den sich eventuell einstellenden
Druck zu entlasten, erstrecken sich die untere Aussparung
21 und die Aussparung 27 in Richtung auf den
unteren Matrizenteil 20, so daß sich das deformierte Dichtungsmittel 28 in diesen Raum ausoehnen kann. Es wurde ferner festgestellt, daß der minimale Kontakt zwischen Dichtungsmittel 28 und Oszillatorteil 30 die erforderliche Qualität der Abdichtung gewährleistet, so daß verhindert wird, daß die Probe 15 unterhalb des Dichtungsmittels 28 in die verbleibende untere Matrizenöffnung 24 eindringt.

Die erfindungsgemäße Oszillatorvorrichtung 30 besteht aus einem Oszillatorkopf 32 und einem Oszillatorschaft 36. Der Oszillatorkopf 32 besitzt einen äußeren Umfang 33 aus einer Abdichtungsfläche 34 und einer Reibungsfläche 35. Der Oszillatorschaft 36 besitzt einen Flansch 37, mit dem ein ausreichender Flächenteil für die gegenseitige Verbindung von Oszillatorschaft 36 und Oszillatorkopf 32 zur Verfügung steht. Der Oszillatorteil 30, insbesondere der Oszillatorkopf 32, ragen aus der unteren Plattenöffnung 19 der Aufnahmeplatte 18 heraus.

Erfindungsgemäß ragt der Oszillatorkopf 32 in die untere Matrizenöffnung 24 des unteren Matrizenringes 22 hinein. Vorzugsweise besitzt der Oszillatorkopf 32 eine zylindrische Form. Der äußere Umfang 33 des Zylinderkopfes 32 ist in eine Abdichtungsfläche 34, die mit dem elastomeren Dichtungsmittel 28 in Eingriff steht, und eine Reibungsfläche 35 eingeteilt, die mit der zu testenden elastomeren Probe 15 in Berührung steht. Die Abdichtungsfläche 34 ist hoch genug, um mit dem elastomeren Dichtungsmittel 28, das sich in der bogenförmigen Aussparung 27 des Metallrings 26 befindet, in Eingriff zu kommen.

Um die Ziele der Erfindung zu erreichen, sind Abänderungen in der Gestalt sowohl des unteren Matrizenteils 20 als auch des Oszillatorteils 30 erforderlich. Da das ausgehärtete Elastomere außerordentlich schwierig aus dem Rheometer-Prüfgerät 10 zu entfernen ist, wenn das Elastomere den Rotor einhüllt oder eng umschließt, ist es entscheidend, daß das Elastomere daran gehindert wird, in einer Lage unterhalb der Reibungsfläche 35 des Oszillatorkopfes 32 auszuhärten. Infolgedessen wird durch Abänderungen der Vorrichtungsteile 20 und 30 ein ringförmiger Hohlraum 40 geschaffen, und zwar durch Verbindung der Reibungsfläche 35 und der Reibungsfläche 23 mit dem elastomeren Dichtungsmittel 28. Der ringförmige Hohlraum 40 ist genau abgegrenzt, da die Form der Öffnung 24 durch das Eindringen des Oszillatorkopfes 32 jenseits des Kontaktes des Dichtungsmittels 28 mit der Abdichtungsfläche 34 begrenzt wird.

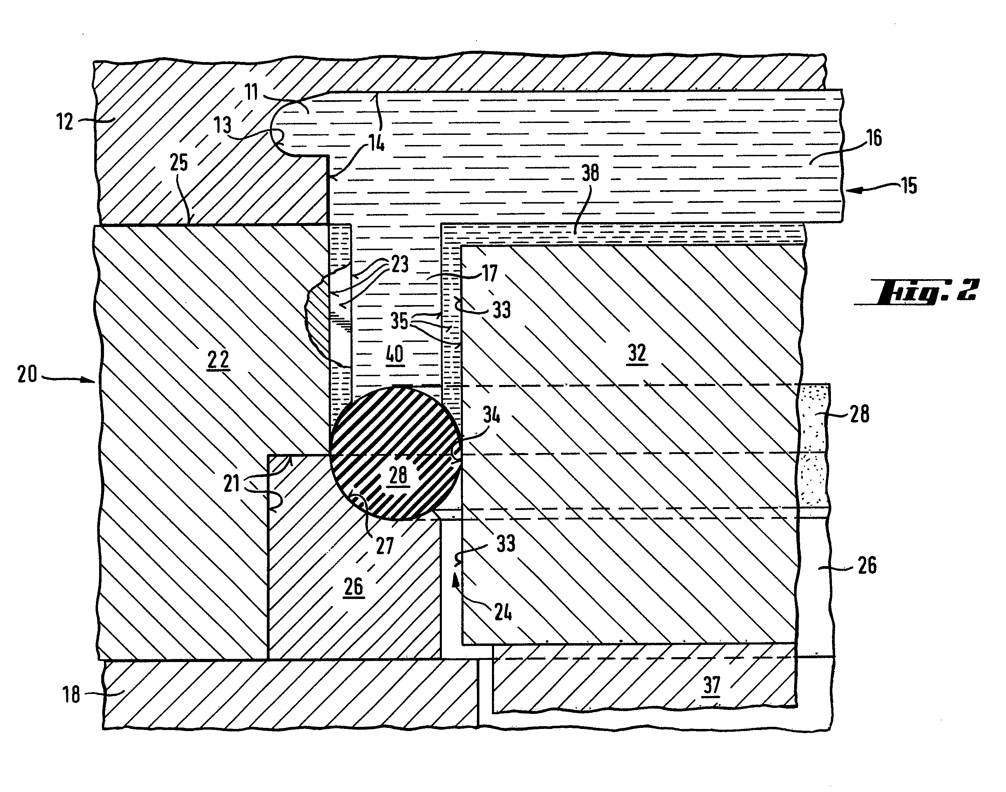

Dadurch, daß das Elastomere von dem Raum unterhalb des Oszillatorkopfes 32 ferngehalten wird, wird die Oszillationsbelastung der elastomeren Probe 15 zwischen Reibungsfläche 35 des Oszillators 30 und innerer Reibungsfläche
23 aufgeteilt. Wie man aus den Figuren 1, 1a und 2 bis
4 ersehen kann, können die Flächen 23 und 35 sowie die
obere Fläche 38 wahlweise eine strukturierte, gezackte,
gravierte oder andersartig gestaltete Oberfläche aufweisen,
wodurch sie während der Rheometerprüfung kraftschlüssig
mit dem Elastomeren verbunden sind.

Mit dem Rheometer-Prüfgerät werden unterschiedliche Beanspruchungen im Innern der elastomeren Probe 15 gemessen.
Dabei wirkt jeder Widerstand, der von dem elastomeren
Dichtungsmittel 28 ausgeht, störend auf die Messungen
der Probe 15. Aus diesem Grunde ist ein minimaler Kontakt
des Dichtungsmittels 28 mit der Abdichtungsfläche 34 erwünscht. Ein derartiger minimaler Kontakt kann dadurch
erreicht werden, daß sich der zur Verfügung stehende Raum
abwärts und nach innen in die untere Aussparung -
21 und die Aussparung 27 erstreckt, wie in den Figuren 3
und 4 dargestellt. Auf diese Weise werden auftretende
elliptische Deformationen des Dichtungsmittels 28 aufgenommen. Die Entlastung dieser elliptischen Deformation des
Dichtungsmittels 28 ist von den Flächen 23 und 35 weggerichtet.

In Figur 2 ist eine vergrößerte Ansicht einer erfindungsgemäßen Ausführungsform des ringförmigen Hohlraums 40
gezeigt. Die Reibungsfläche 35 des Oszillatorkopfes 32
besitzt in diesem Falle eine zylindrische Form. Die innere
Reibungsfläche 23 des unteren Matrizenringes 22 ist im
wesentlichen rechtwinklig zur Fläche der Aufnahmeplatte
18 angeordnet, wodurch eine zylindrische Öffnung 24 geschaffen wird. Mit anderen Worten, die innere Reibungsfläche 23 und die äußere Reibungsfläche 35 sind konzentrisch um eine Achse durch den Oszillatorkopf 32 angeordnet. Das Ergebnis dieses Aufbaues ist ein ringförmiger
Hohlraum 40 mit parallelen Seitenflächen. Da in der bevorzugten Ausführungsform das elastomere Dichtungsmittel
28, beispielsweise in Form eines O-Ringes, auf der Aussparung 27 des Ringes 26 sitzt, ist der Hohlraum 40 von
dem durch die Reibungsflächen 23 und 35 und dem Dichtungsmittel 28 begrenzten Raum auf einen Raum reduziert, der
im wesentlichen in Figur 2 dargestellt ist.

Wenn eine elastomere Testprobe 15 in einem Rheometer 10
zwischen dem oberen Matrizenteil 12 und dem unteren Matrizenteil 20 plaziert wird, dann besteht das Elastomere 15
in der Regel aus einem Pfropfen 16, der die obere Matrizenaussparung 14 ausfüllt, einem nasenförmigen Vorsprung
11, der eine sichelförmige Ausbuchtung 13 ausfüllt und einem elastomeren ringförmigen Steg 17, der den Hohlraum 40 ausfüllt. Währen das Rheometer 10 im Betrieb ist, oszilliert der Oszillator 30, wobei die elastomere Testprobe 15 gleichzeitig erhitzt wird. Die Messung der physikalischen Eigenschaften der elastomeren Testprobe 15 im Innern des Pfropfens 16 und des ringförmigen Steges 17 wird mit Hilfe einer z. B. in US-PS 3 681 980 beschriebenen Ausrüstung durchgeführt. Die Untersuchungsdauer, Temperatur, Schwingkraft und andere zu bestimmende Parameter sind dem Fachmann bekannt und brauchen daher nicht näher ausgeführt zu werden.

Sobald die Testprobe 15 ausgehärtet und die genannten Eigenschaften bestimmt sind, muß die das Rheometer 10 bedienende Person die Testprobe 15 aus der oberen Matrizenaussparung 14 und dem ringförmigen Hohlraum 40 entfernen. Während bei den bekannten Rheometern, wie z. B. aus US-PS 3 681 980 bekannt, der oszillierende Teil von der elastomeren Testprobe 15 eingehüllt wird, ermöglicht die erfindungsgemäße Ausgestaltung des ringförmigen Hohlraums 40 die schnelle Entfernung der Testprobe 15, so daß das Gerät für weitere Elastomerprüfungen sofort wieder zur Verfügung steht. Der elastomere ringförmige Steg 17 innerhalb des Hohlraumes 40 wird ebenfalls schnell entfernt, da sich kein Teil der Probe 15 unterhalb des Oszillatorkopfes 32 befindet. Es wurde festgestellt, daß die Lebensdauer dieser wichtigen Teile des Rheometers durch die erfindungsgemäße Konstruktion verbessert wird, da die elastomere Probe 15 keine Gelegehneit hat, sich an einer der Reibungsflächen 23 und 35 oder an dem Dichtungsmittel 28 innerhalb der für die Entfernung festgelegten Zeit festzusetzen.

In Figur 4 ist eine weitere erfindungsgemäße Ausführungsform dargestellt, in der die Reibungsfläche 23 modifiziert ist, um die Entfernung der elastomeren Testprobe 15 nach dem Aushärten und Prüfen zu erleichtern. Die Reibungsfläche 23 ist nach innen in Richtung auf die Verbindung von Oszillatorkopf 32 und Dichtungsmittel 28 konisch verjüngt ausgeführt.

Wenn die Reibungsfläche des unteren stationären Matrizenringes 22 nach innen konisch verjüngt ist, nimmt die untere Matrizenöffnung 24, bevor der Oszillatorteil 30 in ihr untergebracht wird, eine umgekehrte kegelstumpfartige Gestalt an. Je nach den verschiedenen Gegebenheiten der erfindungsgemäßen Ausführungsformen des unteren Matrizenteils 20 kann der ringförmige Hohlraum 40 eine konstante radiale Tiefe oder eine verminderte radiale Tiefe aufweisen, entsprechend der jeweiligen Steilheit der Reibungsfläche 23.

Der untere Matrizenteil 20 und der Oszillatorteil 30 der
erfindungsgemäßen Ausgestaltung sind sowohl zum Einbau
in bestehende, dem Fachmann bekannte Rheometer, als auch
zur Herstellung von neuen Rheometern geeignet. Sie werden
bevorzugt zum Modifizieren des Hohlraums 24 eingesetzt,
obwohl es auch möglich ist, den erfindungsgemäß ausgestalteten Matrizenteil 20 oder den erfindungsgemäß ausgestalteten Oszillatorteil 30 getrennt voneinander in einem
Rheometer zu verwenden.

Sy/lü

Patentansprüche

1. Oszillierendes Rheometer zur Prüfung von Elastomeren mit einer Aufnahmeplatte und Einrichtung zur erleichterten raschen Entfernung von ausgehärteten elastomeren Proben, gekennzeichnet durch

a) einen stationären Matrizenring (22), der auf der Aufnahmeplatte (18) befestigt ist, mit einer inneren Umfangsfläche, die eine Öffnung begrenzt, und mit einer Aussparung (21) im unteren Bereich der inneren Umfangsfläche,

b) einen Oszillator (30), dessen Kopf (32) in die genannte Öffnung hineinragt, wobei der Oszillatorkopf (32) eine äußere Umfangsfläche (33) aufweist,

c) ein Mittel (28) zum Abdichten der elastomeren Proben zwischen Oszillator (30) und Matrizenring (22), angeordnet in der Aussparung (21) des Matrizenringes (22),

wobei die kombinierten Flächen aus innerer Umfangsfläche des Matrizenringes (22), äußerer Umfangsfläche (33) des Oszillatorkopfes (32) und dem ringförmigen

BAD ORIGINAL

Dichtungsmittel (28) einen ringförmigen Hohlraum zur Aufnahme des zu prüfenden Elastomeren bilden und wobei das ausgehärtete Elastomere auf dieser ringförmigen Hohlraum begrenzt ist.

2. Rheometer nach Anspruch 1, dadurch gekennzeichnet, daß zusätzlich in der Aussparung (21) des Matrizenringes (22) ein Ring (26) angeordnet ist, der mit einer Aussparung (27) versehen ist, in der sich das Dichtungsmittel (28) befindet.

3. Rheometer nach Ansprruch 1, dadurch gekennzeichnet, daß die innere Umfangsfläche im Winkel zu der Grenzfläche des Oszillatorkopfes (32) und dem Dichtungsmittel (28) steht, wodurch eine umgekehrte kegelstumpfförmige Öffnung begrenzt wird.

4. Rheometer nach Anspruch 1, dadurch gekennzeichnet, daß die innere Umfangsfläche im rechten Winkel zur Fläche der Aufnahmeplatte (18) steht, wodurch eine zylindrische Öffnung begrenzt wird.

5. Rheometer nach Anspruch 1, dadurch gekennzeichnet, daß die äußere Umfangsfläche (33) des Oszillatorkopfes (32) eine Reibungsfläche (35) aufweist, durch

die die Elastomeren kraftschlüssig erfaßt werden, wobei die äußere Umfangsfläche (33) außerdem eine Abdichtungsfläche (34) aufweist, die das Dichtungsmittel (28) verschiebbar erfaßt.

6. Rheometer nach Anspruch 5, dadurch gekennzeichnet, daß die Reibungsfläche (35) im rechten Winkel zur Fläche der Aufnahmeplatte (18) stent, wodurch der Oszillatorkopf (32) zylindrisch begrenzt wird.

7. Rheometer nach Anspruch 2, dadurch gekennzeichnet, daß die Aussparung (21) des Matrizenringes (22) und die Aussparung (27) eine elliptische Gestalt aufweisen, die nach innen gerichtet und von größeren Abmessungen als das Dichtungsmittel (28) ist, so daß sich das Dichtungsmittel infolge der während der Prüfung auftretenden Deformation in den elliptischen Raum erstreckt, wodurch der Druckanstieg auf den Oszillatorkopf (32) auf ein Mindestmaß herabgesetzt wird.

8. Oszillierendes Rheometer nach Anspruch 1, gekennzeichnet durch einen stationären Matrizenring (22) mit einer ausgesparten inneren Umfangsfläche, einen in den Matrizenring (22) hineinragenden Oszillatorkopf (32) und ein Dichtungsmittel (28) für elastomere Proben, das innerhalb des Matrizenringes (22) angeordnet ist und mit der inneren Umfangsfläche und dem Oszillatorkopf (32) in Berührung steht.

9. Rheometer nach Anspruch 8, dadurch gekennzeichnet, daß die ausgesparte innere Umfangsfläche eine nach innen gewinkelte elliptische Gestalt von größeren Abmessungen aufweist als das Dichtungsmittel (28), das sich bei der während der Prüfung auftretenden Deformation in diesen elliptischen Raum erstreckt, wodurch der Druckanstieg auf den Oszillatorkopf (32) auf ein Mindestmaß herabgesetzt wird.

10. Rheometer nach Anspruch 8, dadurch gekennzeichnet, daß in der ausgesparten inneren Umfangsfläche außerdem ein Ring (26) angeordnet ist, der mit einer Aussparung (27) versehen ist, in der sich das Dichtungsmittel (28) befindet.

11. Rheometer nach Anspruch 9, dadurch gekennzeichnet, daß die ausgesparte innere Umfangsfläche und die Aussparung (27) in dem Ring (26) eine nach innen gewinkelte elliptische Gestalt von größeren Abmessungen aufweisen als das Dichtungsmittel (28), so daß sich die während der Prüfung auftretende Deformation des

0075040

Dichtungsmittels in den elliptischen Raum erstreckt und der Druckanstieg auf den Oszillatorkopf auf ein Mindestmaß begrenzt wird.

12. Rheometer nach Anspruch 8, dadurch gekennzeichnet, daß zusätzlich ein oberer Matrizenring (12) mit einer inneren Umfangsfläche vorgesehen ist, durch die eine Aussparung (14) begrenzt wird, wobei die innere Umfangsfläche eine sichelförmige Ausbuchtung (13) aufweist, die sich bogenförmig unter einem Winkel von etwa 70$^{\circ}$ entlang der inneren Umfangsfläche erstreckt.

*Fig. 1*

*Fig. 1a*

00750 40 1/4

*Fig. 2*

Fig. 3

Fig. 4

Europäisches
Patentamt

EUROPÄISCHER RECHERCHENBERICHT

0075040

Nummer der Anmeldung

EP 81 10 7560

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 935 729 (R.V. McCARTHY) * Spalte 6, Zeilen 23-44; Figur 1 * | 1 | G 01 N 11/16 |
| A | US-A-3 479 858 (M. UMENO et al.) * Spalte 4, Zeile 74 - Spalte 5, Zeile 4; Spalte 6, Zeilen 1-24; Figur 1 * & DE - A - 1648526 | 1 | |
| D,A | US-A-3 387 490 (R.W. WISE) * Spalte 3, Zeilen 30-49; Figur 3 * & DE - B - 1573713 | 1 | |
| A | DE-A-2 154 453 (COMP. DEUTSCH) * Seite 3, Zeilen 2-5; Figuren * | 5 | |

RECHERCHIERTE SACHGEBIETE (Int. Cl. ³)

G 01 N 11/00

Der vorliegende Recherchenbericht wurde für alle Patentansprüche erstellt.

| Recherchenort DEN HAAG | Abschlußdatum der Recherche 29-04-1982 | Prüfer ANTHONY R.G. |
|---|---|---|